# EUROPÄISCHE PATENTSCHRIFT

(11) **EP 3 801 977 B1**
(45) Veröffentlichungstag und Bekanntmachung des Hinweises auf die Patenterteilung: **14.02.2024**
(21) Anmeldenummer: 19752132.1
(22) Anmeldetag: 31.07.2019
(51) Int. Cl.: B23Q 16/10

(54) **WECHSELVORRICHTUNG FÜR RUNDSCHALTTISCHE**
CHANGING DEVICE FOR ROTARY INDEXING TABLES
DISPOSITIF DE REMPLACEMENT POUR TABLES À TRANSFERT CIRCULAIRE

(30) Priorität: 10.08.2018 DE 102018006306
(43) Veröffentlichungstag der Anmeldung: 14.04.2021
(73) Patentinhaber: Kolibri Beteiligungsgesellschaft mbH & Co. KGaA, 14532 Kleinmachnow (DE)
(72) Erfinder: BECK, Matthias, 72555 Metzingen (DE); LUDWIG, Markus, 72138 Kirchentellinsfurt (DE)
(74) Vertreter: Bartels und Partner, Patentanwälte
(86) Internationale Anmeldenummer: PCT/EP2019/070606
(87) Internationale Veröffentlichungsnummer: WO 2020/030492

(56) Entgegenhaltungen:
- EP-A1- 2 233 244
- CN-A- 105 014 480
- DE-A1-102016 100 230
- DE-A1-102017 101 903

## Beschreibung

Die Erfindung betrifft eine Wechselvorrichtung für Rundschalttische.

Um eine exakte Bearbeitung von auf Rundschalttischen angeordneten Werkstücken zu gewährleisten, ist es nicht nur erforderlich, den Rundschalttisch in betreffenden Drehstellungen genau zu positionieren, sondern, um eine hohe Bearbeitungsqualität zu erreichen, ist es unerlässlich, den Rundschalttisch in den gewählten Drehstellungen sicher festzulegen. Wie es beispielhaft im Dokument DE 103 51 694 C5 aufgezeigt ist, ist es diesbezüglich Stand der Technik, eine Klemmeinrichtung vorzusehen, mittels deren durch Zufuhr eines hydraulischen Druckmittels eine Klemmkraft erzeugbar ist, die einen Reibschluss zwischen dem Tisch und der feststehenden, zugehörigen Tischeinheit herstellt. Beim industriellen Einsatz von Rundschalttischen ergeben sich in Abhängigkeit von den verschiedenen Bearbeitungsaufgaben, der unterschiedlichen Arten von auf dem Rundschalttisch zu bearbeitenden Werkstücken und der Art der hierfür benutzten Werkzeuge, unterschiedliche Anforderungen an die Bauweise der Tischeinheit. Dies betrifft häufig auch die konstruktive Gestaltung der Klemmeinrichtung, an die, je nach Einsatzzweck, beispielsweise unterschiedliche Anforderungen an die Höhe des Haltemoments zu stellen sind. Um den wechselnden Erfordernissen gerecht zu werden, kommen häufig für Tische der gleichen Größenklasse im Wechsel Tischeinheiten und Ständerbauteile unterschiedlicher Bauart zum Einsatz. Solche dem Einsatzgebiet angepassten Wechselvorgänge stellen einen beträchtlichen Kostenfaktor beim Betrieb von Rundschalttischen dar.

Die DE 10 2016 100 230 A1 offenbart eine Wechselvorrichtung für Rundschalttische mit einem als Basiskomponente dienenden Ständerbauteil, das von einer Welle durchgriffen ist, die die Drehachse eines Tisches definiert und eine Schnittstelle aufweist zum Ankuppeln des betreffenden Tisches, der mittels einer Klemmeinrichtung in vorgebbaren Drehpositionen gegenüber der zugehörigen Tischeinheit festlegbar ist, wobei ein Tisch wechselbar auf der Basiskomponente festlegbar ist.

Die CN 105 014 480, die EP 2 233 244 A1 und die DE 10 2017 101 903 A1 beschreiben weitere Wechselvorrichtungen.

Ausgehend von dieser Problematik stellt sich die Erfindung die Aufgabe, eine Wechselvorrichtung zur Verfügung zu stellen, die einen rationellen und kostengünstigeren Betrieb von Rundschalttischen ermöglicht.

Erfindungsgemäß ist diese Aufgabe durch eine Wechselvorrichtung gelöst, die die Merkmale des Patentanspruchs 1 in seiner Gesamtheit aufweist.

Demgemäß sieht die Erfindung zur Lösung dieser Aufgabe eine Wechselvorrichtung mit mindestens zwei Tischen mit zugehöriger Tischeinheit vor, die eine Klemmeinrichtung aufweist, und einem als Basiskomponente dienenden Ständerbauteil, das von einer Welle durchgriffen ist, die die Drehachse der elektromotorisch drehbaren Tische definiert und eine Schnittstelle aufweist zum Ankuppeln der betreffenden Tische, die mittels der Klemmeinrichtung in vorgebbaren Drehpositionen gegenüber der jeweils zugehörigen Tischeinheit festlegbar sind, wobei die mindestens zwei zumindest bezüglich ihrer Klemmeinrichtungen voneinander verschiedene Tischeinheiten mit ihrem zugehörigen Tisch als Austauschkomponenten wechselbar auf der Basiskomponente für ihren Betrieb festlegbar sind. Dadurch, dass Tischeinheiten verschiedener Bauart als Austauschkomponenten konzipiert sind, die über die Schnittstelle der Welle des Ständerbauteils mit diesem kuppelbar sind, beschränken sich bedarfsbedingte Wechselvorgänge auf den Austausch der jeweiligen Tischeinheit mit ihrem Tisch. Mit ein und demselben Ständerbauteil als Basiskomponente sind dadurch Rundschalttische unterschiedlicher Auslegung, beispielsweise hinsichtlich ihrer Klemmeinrichtung, betreibbar und dementsprechend ein kostengünstiger Betrieb von Rundschalttischen realisierbar.

Bei vorteilhaften Ausführungsbeispielen ist am einen freien Ende der Welle, und von dem Ständerbauteil zumindest teilweise umhaust, ein Inkrementalgeber oder Absolutgeber, im folgenden Drehgeber genannt, und am anderen freien Ende die Schnittstelle für den jeweiligen Tisch einer Tischeinheit angeordnet. Der Drehgeber für die Drehposition des Tisches kann für eine hochgenaue Drehpositionierung durch einen Drehgeber gebildet sein, wie er von der Firma Dr. Johannes Heidenhaim GmbH, D 83301 Traunreut, vertrieben wird. Da bei der erfindungsgemäßen Vorrichtung bei Wechselvorgängen das gleiche Ständerbauteil weiterbenutzt wird, kann für eine hochgenaue Drehpositionierung ein solches, verhältnismäßig teures Bauteil ohne wesentliche Erhöhung der Kosten für Wechselvorgänge benutzt werden.

Mit Vorteil ist die Spulenwicklung eines Elektromotors zum Antrieb des jeweiligen Tisches in der Tischeinheit aufgenommen.

Bei vorteilhaften Ausführungsbeispielen bildet das Ständerbauteil mit seinem zylindrischen Außenumfang eine Führungsfläche aus, entlang der die unterschiedlich ausgebildeten Tischeinheiten als jeweilige Austauscheinheit aufsetzbar sind. Wechselvorgänge sind dadurch mit geringem Montageaufwand durchführbar.

Hinsichtlich der unterschiedlichen Bauweise der Tischeinheiten kann die Anordnung mit Vorteil so getroffen sein, dass die jeweilige Klemmeinrichtung zumindest teilweise hydraulisch betätigbar ist, wobei die eine Art von Klemmeinrichtung zwischen Tisch und zugehöriger Tischeinheit durch hydraulisches Aufspreizen den Reibschluss zwischen drehendem Tisch und stationär auf dem Ständerbauteil angeordneter Tischeinheit herstellt und wobei die andere Art von Klemmeinrichtung mit einer Lamellen-Reibschlusseinrichtung versehen ist.

Bei vorteilhaften Ausführungsbeispielen ist das Ständerbauteil zweigeteilt, mit einer Drehführung für die Welle und einem demgegenüber flanschartig und radial nach außen sich verbreiternden Fußteil, auf das die Tischeinheit mit der jeweiligen Art von Klemmeinrichtung stationär aufgesetzt ist.

Mit Vorteil kann sich hierbei an das Fußteil des Ständerbauteils ein koaxialer Hohlzylinder anschließen, der den Drehgeber umgibt.

Besonders günstige Herstell- und Betriebskosten lassen sich realisieren, wenn das Ständerbauteil für alle Größen von Tischen und Tischeinheiten sowie unabhängig von der jeweils eingesetzten Art der Klemmeinrichtung immer dieselbe vorgebbare Baugröße aufweist.

Der jeweils drehbare Tisch kann mit dem Außenumfang der zugehörigen Tischeinheit bündig abschließen oder demgegenüber radial nach innen zurückversetzt sein.

Bei besonders vorteilhaften Ausführungsbeispielen verläuft zwischen der Drehführung des Ständerbauteils und der Welle aufseiten des Ständerbauteils mindestens eine rotative Dichtung, die von Schmiernuten unterbrochen ist. Mit besonderem Vorteil kann hierbei eine Dichtung aus Zurcon (Materialname von Trelleborg; basiert auf Polyurethan) eingesetzt sein, wobei sich von einer Versorgungsstelle aus zugeführte Schmierflüssigkeit über die Schmiernuten über die axiale Länge der Drehführung verteilt. Weiterhin ist es möglich eine Variante mit Spaltdichtungen und Lagerung anstelle von Kontaktdichtungen zu verwenden um höhere Drehzahlen realisieren zu können.

Nachstehend ist die Erfindung anhand von in der Zeichnung dargestellten Ausführungsbeispielen im Einzelnen erläutert.

### Es zeigen:

- Fig. 1: eine entlang einer zentralen Vertikalebene aufgeschnittene, schematisch vereinfachte perspektivische Schrägansicht eines Ausführungsbeispiels der erfindungsgemäßen Wechselvorrichtung und
- Fig. 2: eine entsprechend aufgeschnittene, schematisch vereinfachte perspektivische Schrägansicht eines zweiten Ausführungsbeispiels der erfindungsgemäßen Wechselvorrichtung.

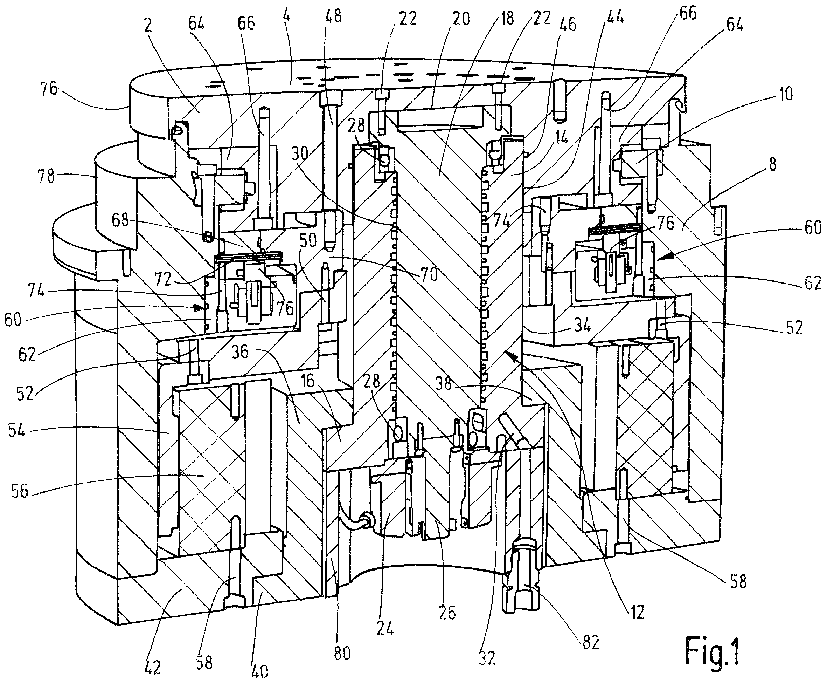

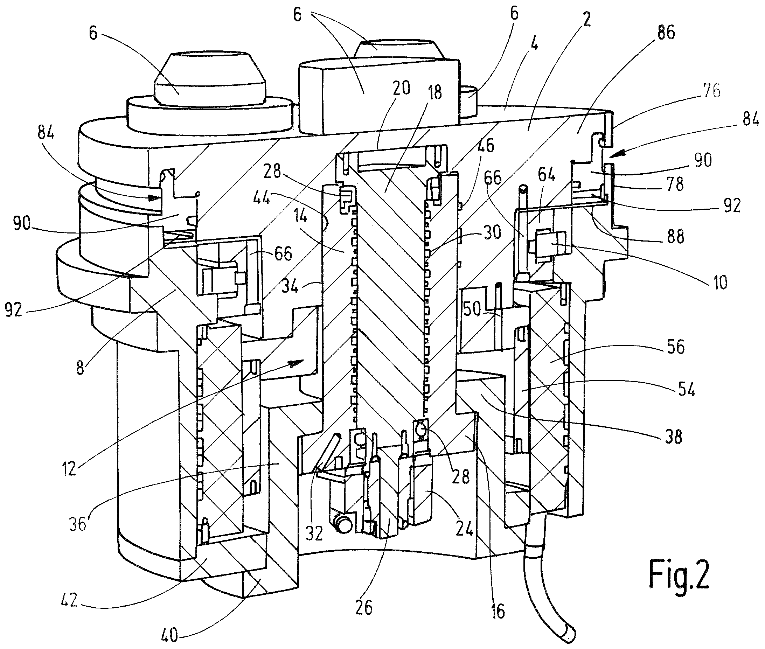

In den Figuren ist ein Tisch mit 2 bezeichnet, der, wie es bei Rundschalttischen üblich ist, eine kreisrunde, ebenflächige Tischfläche 4 besitzt. Bei dem Ausführungsbeispiel von Fig. 1 ist die Tischfläche 4 ohne darauf aufgebaute Teile, wie Werkstücke oder dergleichen, dargestellt, beim Beispiel von Fig. 2 sind jedoch auf der Tischfläche 4 beispielhaft Aufbauten 6 dargestellt. Bei beiden Ausführungsbeispielen von Fig. 1 und Fig. 2 bildet der Tisch 2 eine Baueinheit mit einer zugehörigen, feststehenden Tischeinheit 8, an der er mittels einer Lagerung 10 drehbar gelagert ist, die durch eine Wälzlagereinheit üblicher Art gebildet ist. Bei beiden Ausführungsbeispielen bildet die Tischeinheit 8 eine Art Außengehäuse mit im Wesentlichen kreiszylinderförmigen Außenwandteilen. Die Baueinheit aus Tisch 2 und Tischeinheit 8 bildet eine Austauschkomponente, die, obgleich sie in unterschiedlicher Bauweise ausgeführt sein kann, auf ein und derselben Basiskomponente in Form eines Ständerbauteils 12 festgelegt werden kann.

Die Fig. 1 und 2 zeigen diesbezüglich für Tisch 2 mit Tischeinheit 8 verschiedene Bauweisen, die sich hauptsächlich durch die Art der Klemmung zwischen Tisch 2 und Tischeinheit 8 unterscheiden. Das Ständerbauteil 12 weist einen kreiszylindrischen Hohlkörper 14 auf, an dessen in den Figuren unten liegendem Ende sich ein Fußteil 16 befindet, das die Form eines sich radial nach außen erweiternden Flansches besitzt. Der Hohlkörper 14 bildet die Drehführung für eine Welle 18, die für den Tisch 2 die Drehachse definiert und mit ihrem oberen Ende eine Schnittstelle 20 bildet, mit der die jeweilige Austauschkomponente kuppelbar ist. Beim vorliegenden Beispiel sind, wie Fig. 1 zeigt, hierfür Schrauben 20 für eine Schraubverbindung mit dem Tisch 2 an der Unterseite der Tischfläche 4 vorgesehen.

Ein an der Unterseite des Fußteils 16 angeordneter Drehgeber 24 ermittelt in Zusammenwirkung mit einem Fortsatz 26 der Welle 18 deren Drehposition und damit die Drehposition des Tisches 2. In der durch den Hohlkörper 14 gebildeten Drehführung, in der die Welle 18 mit Wälzlagern 28 und ohne solche führbar gelagert ist, befindet sich ein Drehverteiler für Schmierflüssigkeit sowie sonstige Medien, die der Dichtung zuträglich sind. Dieser weist entlang der Außenseite der Welle 18 zwischen den Wälzlagern 28 eine rotative Dichtung 30 auf, vorliegend eine Zurcondichtung, die von Versorgungsnuten unterbrochen ist. Weiterhin ist es möglich eine Variante mit Spaltdichtungen und Lagerung anstelle von Kontaktdichtungen zu verwenden. Von einer Einspeisestelle (nicht dargestellt) ausgehend, der das Schmiermittel oder das sonstige Medium von einer Versorgungsleitung 32 her zugeführt wird, verteilt sich das Schmiermittel oder das sonstige Medium über die Schmiernuten bzw. Versorgungsnuten entlang der Dichtung 30. Der kreiszylindrische Außenumfang des Hohlkörpers 14 des Ständerbauteils 12 bildet eine Führungsfläche 34, entlang deren die Tischeinheit 8 mit zugehörigem Tisch 2 als Austauschkomponente auf die vom Ständerteil 12 gebildete Basiskomponente aufsetzbar ist. Wie in Fig. 1 gezeigt, liegt in der aufgesetzten Position ein Innengehäuseteil 36 der Tischeinheit 8 mit einem radial nach innen vorstehenden Innenbund 38 auf der Oberseite des flanschartigen Fußteils 16 des Ständerbauteils 12 auf. Das Innengehäuseteil 36 bildet mit einem endseitigen Außenflansch 40 die Auflage für ein Bodenteil 42 des von der Tischeinheit 8 gebildeten Außengehäuses. Am oberen Endbereich der Führungsfläche 34 des Hohlzylinders 14 ist eine Innenumfangsfläche des Tisches 2 geführt, abgedichtet mittels eines Dichtringes 46.

Der Tisch 2 ist über Schrauben 48, 50 und 52 mit einem Mantelteil 54 verbunden, das als Außenrotor eine Spulenwicklung 56 umgibt, die durch Schrauben 58 am Gehäusebodenteil 42 festgelegt ist. Auch mit innen liegendem Innenrotor als sogenanntem Innenläufer möglich. Diese Anordnung bildet den elektrischen Antriebsmotor des Tisches 2. Der hauptsächliche Unterschied zwischen der in Fig. 1 gezeigten und der in Fig. 2 gezeigten Austauschkomponente besteht in der Bauweise der Klemmeinrichtung.

Bei dem Beispiel von Fig. 1 ist eine Mehrzahl von gleich ausgebildeten Klemmeinheiten 60 auf einer zur Welle 18 konzentrischen Kreislinie liegend in gleichmäßigen Abständen voneinander angeordnet, von denen in Fig. 1 zwei Klemmeinheiten 60 sichtbar sind. Jede Klemmeinheit 60 weist einen feststehenden Gerätekörper 62 auf, der an der Innenwand des von der Tischeinheit 8 gebildeten Gehäusemantels befestigt ist. Genauer gesagt befindet sich der Gerätekörper 62 in einem Bereich unterhalb des Lagerinnenteils 64 der Lagerung 10, das mit Schrauben 66 an der Unterseite der Tischfläche 4 befestigt ist. Im Bereich zwischen der Unterseite des Lagerinnenteils 64 und dem Gerätekörper 62 befinden sich, von oben nach unten, ein mit der Tischeinheit 8 verbundener, feststehender Druckring 68, ein Zwischenring 70 und ein Lamellenpaket 72. Der Zwischenring 70, der über die Schrauben 48 mit dem Tisch 2 verbunden ist, ist relativ zum feststehenden Druckring 68 drehbar.

Das Lamellenpaket 72 ist aus einer übereinandergesetzten Folge von Scheiben in der Art von Kupplungslamellen gebildet, wobei das Paket 72 in Aufeinanderfolge feststehende Scheiben, die über Schrauben 74 mit dem feststehenden Druckring 68 verbunden sind, sowie bewegbare Scheiben aufweist, die über nicht gezeigte Schrauben mit dem bewegbaren Zwischenring 70 verbunden sind. Jeder Gerätekörper 62 weist einen hydraulisch betätigbaren Kolben 76 auf, mit dessen Stirnfläche das Lamellenpaket 72 belastbar und gegen Druckring 78 und Zwischenring 70 zusammenpressbar ist, so dass zwischen den Lamellen ein Reibschluss gebildet ist, durch den der Druckring 68 und der Zwischenring 70 zueinander unverdrehbar festlegt sind.

In der Fig. 2 sind Bauelemente, die funktionsmäßig solchen des Beispiels von Fig. 1 entsprechen, mit den gleichen Bezugszeichen wie in Fig. 1 bezeichnet. Während beim Beispiel von Fig. 1 die Umfangsfläche 76 des Tisches 2 gegenüber dem Außenumfang 78 der Tischeinheit 8 radial nach innen zurückversetzt ist, sind beim Beispiel von Fig. 2 Umfangsfläche 76 des Tisches 2 und Außenumfang 78 der Tischeinheit 8 miteinander bündig. Während beim Beispiel von Fig. 1 an der Unterseite des Fußteils 16 ein koaxialer Hohlzylinder 80 angebracht ist, der den Drehgeber 24 umgibt und an dem der Anschluss 82 für die Schmiermittel- oder Medienzufuhr zur Leitung 32 vorgesehen ist, ist dieser Hohlzylinder 80 als optionales Bauteil beim Beispiel von Fig. 2 weggelassen.

Im Übrigen entspricht jedoch das Ständerbauteil 12, was seine Funktion als Basiskomponente anbelangt, auf welche Austauschkomponenten aus Tisch 2 mit Tischeinheit 8 unterschiedlicher Bauweisen aufsetzbar sind, voll und ganz dem Beispiel von Fig. 1. Der Unterschied besteht hauptsächlich in der Anordnung und Bauweise der Klemmeinrichtung, der Position der Lagerung 10 unterhalb der Klemmeinrichtung sowie der Bauweise des Elektromotors, bei dem das mit dem Tisch 2 verbundene Mantelteil 62 nicht als Außenrotor an der Außenseite der Spulenwicklung 56, sondern als Innenrotor an der Innenseite der Spulenwicklung 56 angeordnet ist.

Die Klemmeinheiten 84, die wie die Klemmeinheiten 60 von Fig. 1 hydraulisch betätigt sind, sind zwischen einem der Tischfläche 4 benachbarten Umfangsbereich 86 des Tisches 2 und einer in einer Radialebene verlaufenden Klemmfläche 88 angeordnet, die durch eine Stirnfläche in einer Vertiefung in der Gehäuseaußenwand der Tischeinheit 8 gebildet ist. Die Klemmeinheiten 84 weisen einen Spreizkörper 90 mit einem inneren Druckraum 92 auf. Durch Druckversorgung des Druckraums 92 ist der Spreizkörper 90 hydraulisch aufspreizbar und erzeugt eine zwischen dem Umfangsbereich 86 des Tisches 2 und der feststehenden Klemmfläche 88 an der Tischeinheit 8 wirkende Klemmkraft zur Ausbildung eines Reibschlusses für die Festlegung der relativen Drehposition. Wie in Fig. 2 gezeigt, ist die Lagerung 10 unterhalb der Klemmeinheiten 84 angeordnet, wobei, wie bei Fig. 1, das Lagerinnenteil 64 über Schrauben 66 am Tisch 2 festgelegt ist.

## Patentansprüche

1. Wechselvorrichtung für Rundschalttische, mit mindestens zwei Tischen (2) mit zugehöriger Tischeinheit (8), die eine Klemmeinrichtung (60, 84) aufweist, und einem als Basiskomponente dienenden Ständerbauteil (12), das von einer Welle (18) durchgriffen ist, die die Drehachse der elektromotorisch drehbaren Tische (2) definiert und eine Schnittstelle (20) aufweist zum Ankuppeln der betreffenden Tische (2), die mittels der Klemmeinrichtung (60, 84) in vorgebbaren Drehpositionen gegenüber der jeweils zugehörigen Tischeinheit (8) festlegbar sind, wobei die mindestens zwei zumindest bezüglich ihrer Klemmeinrichtungen (60, 84) voneinander verschiedene Tischeinheiten (8) mit ihrem zugehörigen Tisch (2) als Austauschkomponenten wechselbar auf der Basiskomponente für ihren Betrieb festlegbar sind.

2. Wechselvorrichtung nach Anspruch 1, **dadurch gekennzeichnet, dass** am einen freien Ende der Welle (18), und von dem Ständerbauteil (12) zumindest teilweise umhaust, ein Drehgeber (24) und am anderen freien Ende die Schnittstelle (20) für den jeweiligen Tisch (2) einer Tischeinheit (8) angeordnet sind.

3. Wechselvorrichtung nach Anspruch 1 oder 2, **dadurch gekennzeichnet, dass** die Spulenwicklung (56) eines Elektromotors (54) zum Antrieb des jeweiligen Tisches (2) in der Tischeinheit (8) aufgenommen ist, der als Außen- oder Innenläufer konzipiert ist.

4. Wechselvorrichtung nach einem der vorstehenden Ansprüche, **dadurch gekennzeichnet, dass** das Ständerbauteil (12) mit seinem zylindrischen Außenumfang eine Führungsfläche (34) ausbildet, entlang der die unterschiedlich ausgebildeten Tischeinheiten (8) als jeweilige Austauscheinheit aufsetzbar sind.

5. Wechselvorrichtung nach einem der vorstehenden Ansprüche, **dadurch gekennzeichnet, dass** die jeweilige Klemmeinrichtung (60, 84) zumindest teilweise hydraulisch betätigbar ist, dass die eine Art (84) von Klemmeinrichtung (60, 84) zwischen Tisch (2) und zugehöriger Tischeinheit (8) durch hydraulisches Aufspreizen den Reibschluss zwischen drehendem Tisch (2) und stationär auf dem Ständerbauteil (12) angeordneter Tischeinheit (8) herstellt und dass die andere Art (60) von Klemmeinrichtung (60, 84) mit einer Lamellen-Reibschlusseinrichtung (72) versehen ist.

6. Wechselvorrichtung nach einem der vorstehenden Ansprüche, **dadurch gekennzeichnet, dass** das Ständerbauteil (12) zweigeteilt ist mit einer Drehführung (14) für die Welle (18) und einem demgegenüber flanschartig und radial nach außen sich verbreiternden Fußteil (16), auf das die Tischeinheit (8) mit der jeweiligen Art von Klemmeinrichtung (60, 84) stationär aufgesetzt ist.

7. Wechselvorrichtung nach einem der Ansprüche 2 bis 6, **dadurch gekennzeichnet, dass** an das Fußteil (16) des Ständerbauteils (12) sich ein koaxialer Hohlzylinder (14) anschließt, der den Drehgeber (24) umgibt.

8. Wechselvorrichtung nach einem der vorstehenden Ansprüche, **dadurch gekennzeichnet, dass** das Ständerbauteil (12) für alle Größen von Tischen (2) und Tischeinheiten (8) sowie unabhängig von der jeweils eingesetzten Art der Klemmeinrichtung (60, 84) immer dieselbe vorgebbare Baugröße aufweist.

9. Wechselvorrichtung nach einem der vorstehenden Ansprüche, **dadurch gekennzeichnet, dass** der jeweils drehbare Tisch (2) mit dem Außenumfang (78) der zugehörigen Tischeinheit (8) bündig abschließt oder demgegenüber radial nach innen zurückversetzt ist.

10. Wechselvorrichtung nach einem der Ansprüche 6 bis 9, **dadurch gekennzeichnet, dass** zwischen der Drehführung (14) des Ständerbauteils (12) und der Welle (18) aufseiten des Ständerbauteils (12) mindestens eine rotative Dichtung (30) verläuft, die von Schmier- oder Verteilernuten unterbrochen ist.

## Claims

1. Changing device for rotary indexing tables, having at least two tables (2) with associated table unit (8), which comprises a clamping device (60, 84), and a stand component (12), which is used as a base component and through which a shaft (18) passes, which defines the axis of rotation of tables (2) rotatable by an electric motor and which has an interface (20) for connecting the relevant tables (2), which can be fixed in predefinable rotational positions relative to the respective associated table unit (8) by means of the clamping device (60, 84), wherein the at least two table units (8), differing from each other at least with respect to their clamping devices (60, 84), together with their associated table (2) as exchange components can be fixed on the base component in an interchangeable manner for their operation,

2. Changing device according to claim 1, **characterised in that** a rotary encoder (24) is arranged on the one free end of the shaft (18), and is at least partially enclosed by the stand component (12), and the interface (20) for the respective table (2) of a table unit (8) is arranged on the other free end.

3. Changing device according to claim 1 or 2, **characterised in that** the coil winding (56) of an electric motor (54) for driving the respective table (2) is accommodated in the table unit (8) which is designed an outer or inner rotor.

4. Changing device according to one of the preceding claims, **characterised in that** the stand component (12) with its cylindrical outer circumference forms a guide surface (34) along which the differently configured table units (8) as the respective exchange unit can be placed.

5. Changing device according to one of the preceding claims, **characterised in that** the respective clamping device (60, 84) is at least partially hydraulically operable, **in that** one type (84) of clamping device (60, 84) between table (2) and associated table unit (8) establishes the frictional connection between the rotating table (2) and the table unit (8) arranged stationary on the stand component (12) by hydraulic spreading, and **in that** the other type (60) of clamping device (60, 84) is provided with a lamellar frictional connection device (72).

6. Changing device according to one of the preceding claims, **characterised in that** the stand component (12) is divided into two parts with a rotary guide (14) for the shaft (18) and a foot part (16) which, in contrast, widens radially outwards in the manner of a flange and on which the table unit (8) with the respective type of clamping device (60, 84) is placed in a stationary manner.

7. Changing device according to one of claims 2 to 6, **characterised in that** a coaxial hollow cylinder (14), which surrounds the rotary encoder (24), connects to the foot part (16) of the stand component (12).

8. Changing device according to one of the preceding claims, **characterised in that** the stand component (12) always has the same predefinable size for all sizes of tables (2) and table units (8) and independently of the type of clamping device (60, 84) used in each case.

9. Changing device according to one of the preceding claims, **characterised in that** the respective rotatable table (2) finishes flush with the outer circumference (78) of the associated table unit (8) or in contrast is set back radially inwards.

10. Changing device according to one of claims 6 to 9, **characterised in that** at least one rotary seal (30), which is interrupted by lubrication or distribution grooves, runs between the rotary guide (14) of the stand component (12) and the shaft (18) of the stand component (12).

## Revendications

1. Installation de remplacement pour tables à transfert circulaire comprenant au moins deux tables (2) ayant une unité (8) de table, qui leur appartient, qui a un dispositif (60, 84) de serrage et une pièce (12) formant montant, qui sert de composant de base et dans laquelle passe un arbre (18), qui définit l'axe de rotation des tables (2) pouvant être entraînées par un moteur électrique et qui a une interface (20) d'accouplement des tables (2) concernées, lesquelles, au moyen du dispositif (60, 84) de serrage, peuvent être fixées en des positions en rotation pouvant être données à l'avance par rapport à l'unité (8) de tables, qui leur appartient respectivement, dans laquelle les au moins deux unités (8) de tables, différentes l'une de l'autre au moins en ce qui concerne leurs dispositifs (60, 84) de serrage, peuvent, par sa table (2), qui lui appartient, être fixées, pour leur fonctionnement, de manière remplaçable comme composants de remplacement sur le composant de base.

2. Installation de remplacement suivant la revendication 1, **caractérisée en ce qu'**il est monté, à un bout libre de l'arbre (18) et logé au moins en partie par la pièce (12) formant montant, un codeur (24) et à l'autre bout libre l'interface (20) pour la table (2) respective d'une unité (8) de table.

3. Installation de remplacement suivant la revendication 1 ou 2, **caractérisée en ce que** l'enroulement (56) de bobine d'un moteur (54) électrique d'entraînement de la table (2) respective est logé dans l'unité (8) de table, la table étant conçue en rotor extérieur ou intérieur.

4. Installation de remplacement suivant l'une des revendications précédentes, **caractérisée en ce que** la pièce (12) formant montant, forme, par son contour extérieur cylindrique, une surface (34) de guidage, le long de laquelle les unités (8) de table, constituées de manière différente, peuvent être mises comme unité de remplacement respective.

5. Installation de remplacement suivant l'une des revendications précédentes, **caractérisée en ce que** le dispositif (60, 84) respectif de serrage peut être actionné au moins en partie hydrauliquement, **en ce que** la une sorte (84) de dispositif (60, 84) de serrage entre la table (2) et l'unité (8) de table, qui lui appartient, produit, par écartement hydraulique, la coopération de frottement entre une table (2) tournante et une unité (8) de table montée fixe sur la pièce (12) formant montant, et **en ce que** l'autre type (60) de dispositif (60, 84) de serrage est pourvu d'un dispositif (72) à lamelle de coopération à frottement.

6. Installation de remplacement suivant l'une des revendications précédentes, **caractérisée en ce que** la pièce (12) formant montant est en deux parties, en comprenant un guidage (14) en rotation pour l'arbre (18) et une partie (16) de pied de type en bride par rapport à celui-ci et s'élargissant radialement vers l'extérieur, sur laquelle l'unité (8) de table est mise de manière fixe par le type respectif de dispositif (60, 84) de serrage.

7. Installation de remplacement suivant l'une des revendications 2 à 6, **caractérisée en ce que**, à la partie (16) de pied de la pièce (12) formant montant se raccorde un cylindre (14) creux coaxial, qui entoure le codeur (24).

8. Installation de remplacement suivant l'une des revendications précédentes, **caractérisée en ce que** la partie (12) formant montant a, quelles que soient des dimensions des tables (2) et des unités (8) de table ainsi que quel que soit le type utilisé respectivement du dispositif (60, 84) de serrage, toujours la même dimension de construction, pouvant être donnée à l'avance.

9. Installation de remplacement suivant l'une des revendications précédentes, **caractérisée en ce que** la table (2) tournante respective est à affleurement avec le pourtour (78) extérieur de l'unité (8) de table, qui lui appartient, ou est en retrait par rapport à celle-ci radialement vers l'intérieur.

10. Installation suivant l'une des revendications 6 à 9, **caractérisée en ce que**, entre le guidage (14) en rotation de la partie (12) formant montant et l'arbre (18), s'étend, du côté de la partie (12) formant montant, au moins une étanchéité (30) en rotation, qui est interrompue par des rainures de lubrification ou de répartiteur.
